**Europäisches Patentamt**

**European Patent Office**

**Office européen des brevets**

(19)

(11) Veröffentlichungsnummer : **0 341 792 B1**

# EUROPÄISCHE PATENTSCHRIFT

(12)

(45) Veröffentlichungstag der Patentschrift :
02.01.92 Patentblatt 92/01

(51) Int. Cl.$^5$ : **C02F 9/00**

(21) Anmeldenummer : **89201164.4**

(22) Anmeldetag : **08.05.89**

(54) Verfahren zur Aufarbeitung von verbrauchten Beizbädern.

(30) Priorität : **12.05.88 DE 3816278**

(43) Veröffentlichungstag der Anmeldung :
**15.11.89 Patentblatt 89/46**

(45) Bekanntmachung des Hinweises auf die
Patenterteilung :
**02.01.92 Patentblatt 92/01**

(84) Benannte Vertragsstaaten :
**DE FR GB**

(56) Entgegenhaltungen :
**DE-A- 2 042 785**
**DE-A- 2 327 965**

(73) Patentinhaber : **Krupp Stahl**
**Aktiengesellschaft**
**Alleestrasse 165**
**W-4630 Bochum 1 (DE)**

(72) Erfinder : **Lehmann, Rainer, Dr.**
**Amselweg 14**
**W-6477 Limeshain 3 (DE)**
Erfinder : **Pietsch, Hartmut, Dr.**
**Feldbergstrasse 42**
**W-6380 Bad Homburg v.d.H. (DE)**
Erfinder : **Simmer, Wilfried**
**Wiesenweg 3**
**W-6347 Angelburg 1 (DE)**
Erfinder : **Mitsch, Kurt**
**Grüner Weg 3**
**W-6348 Herborn (DE)**

(74) Vertreter : **Werner, Dietrich H. et al**
**Cohausz & Florack Schumannstrasse 97**
**W-4000 Düsseldorf 1 (DE)**

## Beschreibung

Die Erfindung bezieht sich auf ein Verfahren zur Aufarbeitung von verbrauchten Beizbädern, die bei der Oberflächenbehandlung von metallischen Werkstoffen, insbesondere von Edelstählen, anfallen, die HF, $HNO_3$ sowie Fluoride und Nitrate des Fe, Cr und Ni enthalten und die einen pH-Wert > 3 aufweisen.

Metallische Werkstoffe und insbesondere Edelstähle werden während ihrer Verarbeitung mit einer sauren, wässrigen Lösung — der sog. Beize — behandelt, um die an der Oberfläche befindlichen Reaktionsprodukte zu entfernen, die sich bei der Wärmebehandlung und/oder der Verformung der Werkstoffe gebildet haben. Die für die Oberflächenbehandlung von Edelstählen verwendeten Beizen enthalten ca. 20 Gew.% $HNO_3$ und 3 bis 4 Gew.% HF. Bei der Oberflächenbehandlung der metallischen Werkstoffe bilden sich wasserlösliche Metallfluoride und -nitrate, die sich in der Beizlösung bis zu einem Metallgehalt von 50 bis 120 g/l aufkonzentrieren. Außerdem gelangen unlösliche Feststoffteilchen in die Beizlösung. Pro Tonne Edelstahl fallen bis zu 100 l verbrauchte Beizlösungen an, die stark sauer reagieren, einen hohen Gehalt an gelösten Schwermetallen aufweisen und unlösliche Feststoffteilchen enthalten. Diese verbrauchten Beizbäder müssen aufgearbeitet werden, da ihre Inhaltsstoffe außerordentlich toxisch sind und soweit wie möglich wiederverwendet werden sollten.

Aus der DE-OS 2327965 ist ein Verfahren zur Neutralisation und Aufarbeitung von verbrauchten salpeter- und flußsauren Beizen bekannt, die Eisen-, Chrom- und Nickelionen sowie ggf. Ionen der sonstigen Legierungselemente von Edelstählen enthalten. Bei diesem Verfahren werden die Beizen mit Ammoniak bis zu einem pH-Wert von 7,0 bis 10,0 neutralisiert, wobei Metallhydroxide und Metalloxidhydrat ausfallen, welche abfiltriert werden. Das Filtrat wird mit einer dem Fluoridgehalt äquivalenten Menge einer Lösung von Aluminiumnitrat versetzt, wobei der pH-Wert des Filtrats durch Zugabe von Ammoniak auf einen Wert zwischen 6,5 und 9,5 gehalten wird. Das ausgefallene Ammoniumhexafluoroaluminat wird abgetrennt, und die dabei anfallende Lösung wird 5 bis 30 Minuten zum Sieden erhitzt, wobei Chrom-(III)-Hydroxid ausfällt. Nach Abtrennung des Chrom-(III)-Hydroxids wird die Lösung mit Salpetersäure angesäuert und eingedampft. Der flüssige Rückstand wird schließlich mit einem aliphatischen Keton vermischt, wobei sich das im Rückstand noch vorhandene Nickelnitrat im Keton löst und wobei das Ammoniumnitrat kristallin ausfällt.

Das bekannte Verfahren hat den Nachteil, daß der bei der Neutralisation anfallende Hydroxidschlamm einen hohen Fluorgehalt aufweist, der eine Verhüttung der Hydroxide erschwert oder sogar verhindert. Ferner wird durch die beim bekannten Verfahren vorgesehene Fluoridfällung keine weitgehend quantitative Fluoridabscheidung erreicht, da das Ammoniumhexofluoroaluminat eine gewisse Löslichkeit aufweist. Außerdem stößt die Verwendung des Ammoniumhexofluoroaluminats bei der Aluminiumherstellung auf Schwierigkeiten, so daß dieser Stoff nicht industriell genutzt werden kann. Schließlich ist beim bekannten Verfahren eine Gewinnung des Ammoniumnitrats und des restlichen Nickels nur durch den Einsatz eines Ketons möglich, was sowohl die Arbeitssicherheit als auch die Wirtschaftlichkeit des Verfahrens nachteilig beeinflußt.

Der Erfindung liegt daher die Aufgabe zugrunde, ein Verfahren der eingangs genannten Art zu schaffen, das durch den Einsatz einfacher technischer Mittel eine weitestgehende Rückgewinnung und Wiederverwendung der in den verbrauchten Beizbädern enthaltenen Inhaltsstoffe ermöglicht.

Die der Erfindung zugrundeliegende Aufgabe wird dadurch gelöst, daß den verbrauchten Beizbädern einerseits $NH_3$ und andererseits NaOH, $NaHCO_3$ oder $Na_2CO_3$ zugegeben wird, wobei ein pH-Wert von 7,5 bis 9,5 und ein Na-F-Molverhältnis von 0,5 : 1 bis 1 : 1 einzustellen ist, daß dann die bei der Neutralisation ausgefallenen Metall-Hydroxide abfiltriert werden, daß anschließend aus dem Filtrat die noch in Lösung befindlichen Metall-Kationen durch einen Kationenaustauscher abgetrennt werden, daß danach aus der fluoridhaltigen Lösung durch Zugabe einer etwa äquimolaren Menge $Al(NO_3)_3$ $Na_3AlF_6$ gefällt sowie abfiltriert wird und daß der Wassergehalt der $NH_4NO_3$-haltigen Lösung durch Eindampfung mindestens bis zu einem $NH_4NO_3$-Gehalt von 60 Gew.% reduziert wird. Das $Al(NO_3)$ kann vorteilhaft durch Auflösung von $Al(OH)_3$ in $HNO_3$ hergestellt werden.

Das erfindungsgemäße Verfahren hat den Vorteil, daß die $F^-$-Ionen nahezu quantitativ als $Na_3AlF_6$ gefällt werden, wobei diese Verbindung problemlos zur Aluminiumherstellung verwendet werden kann, da sie maximal mit ca. 1 Gew.% $(NH_4)_3AlF_6$ verunreinigt ist. Ein weiterer Vorteil des erfindungsgemäßen Verfahrens besteht darin, daß die nicht als Hydroxid gefällten Schwermetalle, insbesondere das als $[Ni(NH_3)_6]^{2+}$ vorliegende Nickel, nahezu quantitativ durch einen Ionenaustauscher abgetrennt werden, wodurch sich die Gewinnung des $NH_4NO_3$ vereinfacht. Ferner fällt beim erfindungsgemäßen Verfahren das $NH_4NO_3$ entweder in kristalliner Form oder in Form einer konzentrierten wässrigen Lösung an; beide Produkte können ohne weiteres vorteilhaft zur Herstellung von Düngemitteln und Sicherheitssprengstoffen oder als elektrolytisches Beizmittel verwendet werden. Es ist auch möglich, eine Teilmenge der den Kationenaustauscher verlassenden, fluoridhaltigen Lösung als elektrolytische Beizlösung zu verwenden. Im übrigen können die Metall-Hydroxide verhüttet werden, so daß letztlich alle Inhaltsstoffe der

verbrauchten Beizbäder in vorteilhafter Weise wiederverwendbar sind.

Nach der Erfindung ist ferner vorgesehen, daß den verbrauchten Beizbädern zunächst $NH_3$ zugegeben wird, wobei ein pH-Wert von 7,5 bis 8,5 einzustellen ist, und daß den Beizbädern dann NaOH zugegeben wird, wobei ein pH-Wert von 8,5 bis 9,5 und ein Na-F-Molverhältnis von 0,5 : 1 bis 1 : 1 einzustellen ist. Durch diese Verfahrensmaßnahme wird in überraschender Weise erreicht, daß der Metall-Hydroxid-Niederschlag einen außerordentlich geringen Fluoridgehalt aufweist, wodurch der Verbrauch an Waschwasser vermindert und die Verhüttung der Hydroxide erleichtert wird.

In weiterer Ausgestaltung der Erfindung ist vorgesehen, daß die Fällung der Metall-Hydroxide bei 80 bis 95°C während 10 bis 30 Minuten erfolgt. Bei Einhaltung dieser Bedingungen werden die Schwermetalle weitgehend als Hydroxide abgeschieden, die in einer gut filtrierbaren Form anfallen. Ferner ist in weiterer Ausgestaltung der Erfindung vorgesehen, daß vor der Eindampfung die in der nitrathaltigen Lösung noch vorhandenen $F^-$-Ionen mit $Ca(OH)_2$ als $CaF_2$ gefällt und abfiltriert werden. Durch diese Maßnahme wird in vorteilhafter Weise erreicht, daß die durch Eindampfung gewonnene $NH_4NO_3$-Lösung fluoridfrei ist, was sich bei der Verwendung dieser Lösung als vorteilhaft erwiesen hat. Nach der Erfindung ist es schließlich besonders vorteilhaft, wenn der Wassergehalt der $NH_4NO_3$-haltigen Lösung bis zu einem $NH_4NO_3$-Gehalt von 70 bis 80 Gew.% reduziert wird, da die hierbei anfallende konzentrierte wässrige $NH_4NO_3$-Lösung sofort zu einem Sicherheitssprengstoff verarbeitet werden kann.

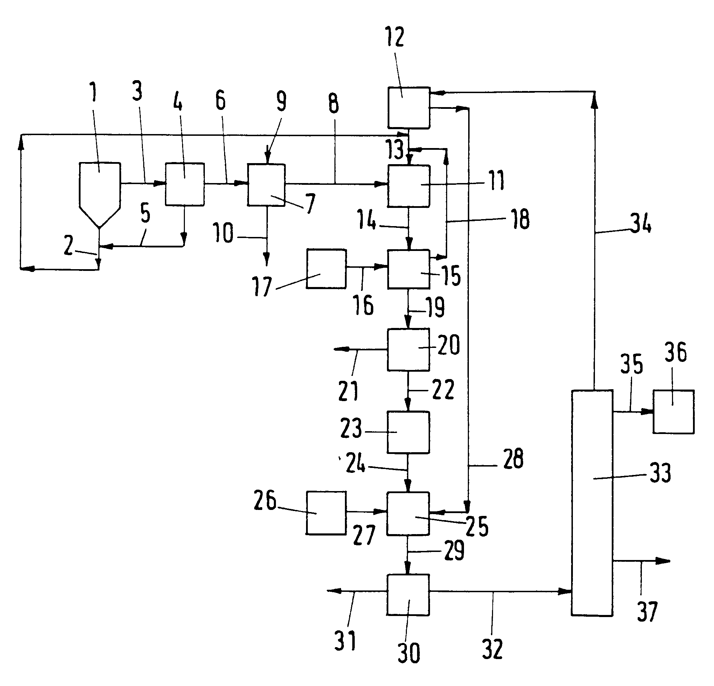

Der Gegenstand der Erfindung wird nachfolgend anhand der Zeichnung sowie eines Ausführungsbeispiels näher erläutert.

Die verbrauchten Beizbäder werden im Vorratstank (1) gesammelt, wo ein Teil der unlöslichen Feststoffteilchen sedimentiert und über die Leitung (2) abgezogen wird. Über die Leitung (3) gelangt die verbrauchte Beizlösung in das Filter (4), in dem die noch vorhandenen unlöslichen Feststoffteilchen, vorzugsweise durch Druckfiltration, abgetrennt werden. Die abfiltrierten Feststoffteilchen werden dem Filter (4) über die Leitung (5) entnommen und zusammen mit den sedimentierten Feststoffteilchen dem Reaktionsbehälter (11) zugeführt.

Die feststofffreie verbrauchte Beizlösung gelangt über die Leitung (6) in den Reaktor (7), der mit einem Adsorptiv-Harz gefüllt ist, das einen großen Teil der noch vorhandenen freien Säuren HF und $HNO_3$ adsorbiert. Der Reaktor (7) ist zweisträngig ausgeführt, wodurch eine diskontinuierliche Adsorption und Desorption der freien Säuren möglich wird. Die Desorption der freien Säuren erfolgt durch einen Waschprozeß, bei dem Wasser über die Leitung (9) in den Reaktor (7) gelangt. Die freien Säuren verlassen den Reaktor (7) in Form einer wässrigen Lösung über die Leitung (10) und werden dem Beizprozeß erneut zugeführt.

Die den Reaktor (7) verlassende Beizlösung hat einen pH-Wert > 3 und gelangt über die Leitung (8) in den Reaktionsbehälter (11), dem aus dem Tank (12) über die Leitung (13) gasförmiges oder in Wasser gelöstes $NH_3$ zugeführt wird. Im Reaktionsbehälter (11) wird ständig ein pH-Wert von 8 sowie eine Temperatur von 80 bis 90°C aufrechterhalten, wobei die Verweilzeit der Beizlösung ca. 15 Minuten beträgt. Das Reaktionsgemisch verläßt den Reaktionsbehälter (11) über die Leitung (14) und gelangt in den Reaktionsbehälter (15), dem über die Leitung (16) aus dem Vorratstank (17) wässrige NaOH zugeführt wird. Im Reaktionsbehälter (15) wird ein pH-Wert von ca. 9 aufrechterhalten, und das Na-F-Molverhältnis wird auf einen Wert von ca. 0,6 : 1 eingestellt. Im Reaktionsbehälter (15) herrscht eine Temperatur von 90 bis 95°C. Das eventuell im Reaktionsbehälter (15) freigesetzte $NH_3$ wird in den Reaktionsbehälter (11) über die Leitung (18) zurückgeführt. Das Reaktionsgemisch verläßt den Reaktionsbehälter (15) nach einer Aufenthaltszeit von ca. 5-10 Minuten und gelangt über die Leitung (19) in das Filter (20), wo die ausgefallenen Metall-Hydroxide sowie die über die Leitung (2) in den Reaktionsbehälter (11) geführten Feststoffteilchen abgetrennt werden. Von den Schwermetallen, die in den verbrauchten Beizbädern gelöst sind, werden das Eisen nahezu quantitativ, das Chrom zum größten Teil und das Nickel zu einem geringeren Teil als Hydroxide gefällt und abgetrennt. Die abfiltrierten Hydroxide und Feststoffteilchen verlassen das Filter (20) über die Fördereinrichtung (21); sie werden gewaschen, getrocknet und anschließend verhüttet.

Das alkalische Filtrat wird über die Leitung (22) in den Kationenaustauscher (23) gefördert, der austauschfähige $NH_4^+$-Ionen enthält. Diese werden gegen die im Filtrat noch vorhandenen Schwermetallionen ausgetauscht, so daß aus dem Ionenaustauscher (23) über die Leitung (24) eine schwermetallfreie Lösung abfließt. Der Ionenaustauscher (23) ist ebenfalls zweisträngig ausgeführt, so daß er diskontinuierlich beladen und regeneriert werden kann. Die schwermetallfreie Lösung wird im Reaktionsbehälter (25) mit einer äquimolaren Menge $Al(NO_3)_3$ versetzt, das aus dem Tank (26) über die Leitung (27) in Form einer wässrigen Lösung in den Reaktionsbehälter (25) gelangt. Im Reaktionsbehälter (25) wird ein pH-Wert von 8,5 bis 9 aufrechterhalten, was durch die Dosierung von $NH_3$ über die Leitung (28) erreicht werden kann. Das Reaktionsgemisch verläßt den Reaktionsbehälter (25) über die Leitung (29) und gelangt in das Filter (30), wo die Abtrennung des $Na_3AlF_6$ erfolgt. Das $Na_3AlF_6$ wird dem Filter (30) über die Transporteinrichtung (31) entnommen, gewaschen, getrocknet und an eine Aluminiumhütte abge-

geben.

Die nahezu fluoridfreie $NH_4NO_3$-Lösung wird über die Leitung (32) in den Verdampfer (33) gefördert, der mehrstufig ausgeführt sein kann und dessen Verdampferstufen zumindest teilweise unter Vakuum betrieben werden können. Beim Eindampfen der $NH_4NO_3$-Lösung wird zunächst Ammoniak ausgetrieben, das über die Leitung (34) in den Vorratstank (12) gelangt. Der bei der Eindampfung anfallende Wasserdampf wird über die Leitung (35) in den Kondensator (36) geführt, wobei das hier anfallende Wasser weitgehend in den Prozeß zurückzuführen ist (Waschwasser, Herstellung der NaOH- und der $Al(NO_3)_3$-Lösung usw.). Der letzten Stufe des Verdampfers (33) wird eine $NH_4NO_3$-Lösung über die Leitung (37) entnommen, die ca. 20 Gew.% Wasser enthält. Diese Lösung wird zur Herstellung eines Sicherheitssprengstoffs verwendet. Die Eindampfung kann auch weitergeführt werden, so daß das $NH_4NO_3$ in fester, kristalliner Form anfällt.

Die den Verdampfer (33) verlassenden Lösungen haben immer eine Temperatur von mehr als 30°C. Daher kommt es in den eingedampften Lösungen, die mindestens 60 Gew.% und vorzugsweise 70 bis 80 Gew.% $NH_4NO_3$ enthalten, nicht zur Ausscheidung von festem, kristallinem $NH_4NO_3$. Mit dem erfindungsgemäßen Verfahren wird also eine praktisch rückstandsfreie Überführung der verbrauchten Beizbäder in verwertbare Produkte erreicht.

## Patentansprüche

1. Verfahren zur Aufarbeitung von verbrauchten Beizbädern, die bei der Oberflächenbehandlung von metallischen Werkstoffen, insbesondere von Edelstählen, anfallen, die HF, $HNO_3$ sowie Fluoride und Nitrate des Fe, Cr und Ni enthalten und die einen pH-Wert > 3 aufweisen, dadurch gekennzeichnet, daß den verbrauchten Beizbädern einerseits $NH_3$ und andererseits NaOH, $NaHCO_3$ oder $Na_2CO_3$ zugegeben wird, wobei ein pH-Wert von 7,5 bis 9,5 und ein Na-F-Molverhältnis von 0,5 : 1 bis 1 : 1 einzustellen ist, daß dann die bei der Neutralisation ausgefallenen Metall-Hydroxide abfiltriert werden, daß anschließend aus dem Filtrat die noch in Lösung befindlichen Metall-Kationen durch einen Kationenaustauscher abgetrennt werden, daß danach aus der fluoridhaltigen Lösung durch Zugabe einer etwa äquimolaren Menge $Al(NO_3)_3$ $Na_3AlF_6$ gefällt sowie abfiltriert wird und daß der Wassergehalt der $NH_4NO_3$-haltigen Lösung durch Eindampfung mindestens bis zu einem $NH_4NO_3$-Gehalt von 60 Gew.% reduziert wird.

2. Verfahren nach Anspruch 1, dadurch gekennzeichnet, daß den verbrauchten Beizbädern zunächst $NH_3$ zugegeben wird, wobei ein pH-Wert von 7,5 bis 8,5 einzustellen ist, und daß den Beizbädern dann NaOH zugegeben wird, wobei ein pH-Wert von 8,5 bis 9,5 und ein Na-F-Molverhältnis von 0,5 : 1 bis 1 : 1 einzustellen ist.

3. Verfahren nach den Ansprüchen 1 bis 2, dadurch gekennzeichnet, daß die Fällung der Metall-Hydroxide bei 80 bis 95°C während 10 bis 30 Minuten erfolgt.

4. Verfahren nach den Ansprüchen 1 bis 3, dadurch gekennzeichnet, daß vor der Eindampfung die in der nitrathaltigen Lösung noch vorhandenen $F^-$-Ionen mit $Ca(OH)_2$ als $CaF_2$ gefällt und abfiltriert werden.

5. Verfahren nach den Ansprüchen 1 bis 4, dadurch gekennzeichnet, daß der Wassergehalt der $NH_4NO_3$-haltigen Lösung bis zu einem $NH_4NO_3$-Gehalt von 70 bis 80 Gew.% reduziert wird.

## Claims

1. Process for treating spent pickling bath solutions that result from the surface treatment of metallic materials, especially stainless steels, and contain HF, $HNO_3$ and fluorides and nitrates of Fe, Cr and Ni, and have a pH greater than 3 ; characterized by the addition of $NH_3$ on the one hand and NaOH, $NaHCO_3$ or $Na_2CO_3$ on the other, whereby the pH is set to 7.5-9.5 and the Na-F molar ratio to 0.5 : 1-1 : 1 ; by the subsequent filtering-off of the metal hydroxides that separate out during the neutralization ; by the subsequent removal of any metal cations left in the filtrate by means of a cation exchanger ; by subsequent addition of an approximately equimolar amount of $Al(NO_3)_3$ to the fluoride-containing solution to cause precipitation of $Na_3AlF_6$, the precipitate then being filtered off ; and by reduction of the water content of the $NH_4NO_3$-containing solution by evaporation until the $NH_4NO_3$ content is at least 60% by weight.

2. Process as claimed in claim 1, characterized by the addition of $NH_3$ to the spent pickling bath solutions, whereby the pH is set to 7.5-8.5 ; and by the subsequent addition of NaOH, whereby the pH is set to 8.5-9.5 and the Na-F molar ratio to 0.5 : 1-1 : 1.

3. Process as claimed in either of claims 1 and 2, characterized by the fact that the precipitation of the metal hydroxides takes place at 80-95°C during a period of 10-30 minutes.

4. Process as claimed in any of claims 1 to 3, characterized by addition of $Ca(OH)_2$ before the evaporation stage, causing any $F^-$-ions still present in the nitrate-containing solution to be precipitated out as $CaF_2$, which is then filtered off.

5. Process as claimed in any of claims 1 to 4, characterized in that the water content of the $NH_4NO_3$-containing solution is reduced until the $NH_4NO_3$ content is 70-80% by weight.

## Revendications

1. Procédé pour le retraitement de bains de décapage usés qui résultent du traitement superficiel de matériaux métalliques, en particulier d'aciers spéciaux, qui contiennent HF, $HNO_3$ ainsi que des fluorures et des nitrates de Fe, Cr et Ni et qui présentent un pH > 3, caractérisé en ce qu'on ajoute aux bains de décapage usés d'une part $NH_3$ et d'autre part NaOH, $NaHCO_3$ ou $Na_2CO_3$, un pH de 7,5 à 9,5 et un rapport molaire Na-F de 0,5 : 1 à 1 : 1 devant être ajustés, qu'on sépare ensuite par filtration les hydroxydes métalliques précipités lors de la neutralisation, qu'on sépare ensuite du filtrat par un échangeur de cations les cations métalliques se trouvant encore en solution, qu'ensuite on précipite et sépare par filtration $Na_3AlF_6$ de la solution contenant des fluorures par addition d'une quantité sensiblement équimolaire de $Al(NO_3)_3$, et qu'on réduit la teneur en eau de la solution contenant $NH_4NO_3$ par évaporation jusqu'à une teneur en $NH_4NO_3$ de 60% en poids.

2. Procédé selon la revendication 1, caractérisé en ce qu'on ajoute d'abord $NH_3$ aux bains de décapage usés, un pH de 7,5 à 8,5 devant être réglé, et qu'on ajoute ensuite NaOH aux bains de décapage, un pH de 8,5 à 9,5 et un rapport molaire Na-F de 0,5: 1 à 1 : 1 devant être réglés.

3. Procédé selon les revendications 1 à 2, caractérisé en ce que la précipitation de l'hydroxyde métallique se produit à 80 à 95°C pendant 10 à 30 minutes.

4. Procédé selon les revendications 1 à 3, caractérisé en ce que, avant l'évaporation, on précipite et on sépare par filtration sous forme $CaF_2$, avec $Ca(OH)_2$, les ions $F^-$ encore présents dans la solution contenant des nitrates.

5. Procédé selon les revendications 1 à 4, caractérisé en ce qu'on réduit la teneur en eau de la solution contenant $NH_4NO_3$ jusqu'à une teneur en $NH_4NO_3$ de 70 à 80% en poids.